# EUROPEAN PATENT SPECIFICATION

(11) **EP 3 836 791 B1**
(45) Date of publication and mention of the grant of the patent: **14.01.2026**
(21) Application number: 19765307.4
(22) Date of filing: 16.08.2019
(51) Int. Cl.: A21D 2/18, A21D 6/00, A21D 8/02, A21D 13/062, A21D 13/066, A23L 7/117, A23L 29/238, A21D 2/36

(54) **BAKED CRISP PRODUCT FOR HUMAN CONSUMPTION AND METHODS FOR ITS MANUFACTURING**
GEBACKENES KNUSPRIGES PRODUKT FÜR DEN MENSCHLICHEN VERZEHR UND VERFAHREN ZU SEINER HERSTELLUNG
PRODUIT CROUSTILLANT CUIT POUR CONSOMMATION HUMAINE ET SES PROCÉDÉS DE FABRICATION

(30) Priority: 16.08.2018 GB 201813394
(43) Date of publication of application: 23.06.2021
(73) Proprietor: Logi Food Technologies Ltd, Chiddingfold Godalming GU8 4SY (GB)
(72) Inventor: DANIELL, Heather, London SW19 5HH (GB)
(74) Representative: O'Kane, Jessica Ann
(86) International application number: PCT/GB2019/052314
(87) International publication number: WO 2020/035704

(56) References cited:
- WO-A1-2017/212261
- US-A- 5 227 248
- US-A1- 2010 303 997
- US-A1- 2013 196 033
- "HANDBOOK OF DIETARY FIBER", 1 January 2001, MARCEL DEKKER, New York, US, ISBN: 978-0-8247-8960-2, article JANETTE GELROTH ET AL: "Chapter 23: Food uses of fiber", pages: 435 - 452, XP008168513
- "Food Industrial Processes - Methods and Equipment", 22 February 2012, INTECH, ISBN: 978-953-30-7905-9, article JAFAR MILANI ET AL: "Hydrocolloids in Food Industry", XP055334179, DOI: 10.5772/32358

## Description

### Technical Field

The present invention relates to baked crisp products for human consumptions, and methods of making said baked crisp products. In particular, the present invention relates to baked crisp products with low starch, sugar (mono- or disaccharides) and/or gluten content.

### Background

Formed savoury snacks for human consumption, such as baked crisp products, are usually bound together with a binder. Often, binders comprise starch (including modified starch), sugars (mono- or disaccharides), gluten, or synthetic binders such as poly vinyl alcohol (PVA). However, there is a consumer demand for healthier snack food products that are lower in starch and/or sugar.

There is also a consumer demand for food products to contain wholefood ingredients and be processed to as little degree as possible. Some consumers wish to avoid wheat flour and other flours that contain gluten. There is a consumer demand for low-gluten or gluten-free products.

It is an object of the present invention to provide baked crisp products which satisfy in whole or in part one or more of these consumer demands, and a method for making such baked crisp products.

### Summary

At its broadest, the present invention provides a new baked crisp product having a low sugar and starch content comprising heat-treated psyllium and blended food ingredients, and methods of producing said baked crisp product.

The present invention is defined by the appended claims.

According to a first aspect of the present invention, there is provided a method of producing a baked crisp product for human consumption, the method comprising:
providing blended food ingredients, wherein food ingredients include main food ingredients and optionally other food ingredients;
mixing the blended food ingredients with binder ingredient(s) and optionally water;
heating the mixture to a temperature of from 50 to 100 °C, thereby heat-treating the binder ingredient(s) to provide a heat-treated mixture comprising binder component;
optionally adding further blended or unblended food ingredients to the heat-treated mixture;
optionally blending the heat-treated mixture;
forming the heat-treated mixture to provide a formed product shape; and
dehydrating the formed product shape to provide a baked crisp product, whereby during the heating and dehydrating the ingredients are converted to corresponding components;
wherein the baked crisp product consists of:
   main food component in an amount of from 95 to 99.9% by total dry component weight, wherein the main food component consists of two or more components selected from the group consisting of vegetable, fruit, meat,
   the main food component consisting of:
      vegetable in an amount of from 0 to 97% by total dry component weight;
      fruit in an amount of from 0 to 65% by total dry component weight;
      meat in an amount of from 0 to 97% by total dry component weight;
      dairy and eggs in an amount of from 0 to 97% by total dry component weight;
   other food component in an amount of from 0 to 5% by total dry component weight; and
   binder component in an amount of from 0.1 to 5% by total dry component weight;
wherein the baked crisp product has a sugar content of from 0 to 40%, a fat content of from 0 to 40%, and a starch content of 0 to 10% by weight, and
wherein the binder ingredient comprises unrefined psyllium to provide a binder component comprising unrefined heat-treated psyllium in an amount of from 50 to 100% w/w of the binder component.

This aspect of the invention may provide a method of producing a baked crisp product for human consumption, the method comprising:
providing blended food ingredients, wherein food ingredients include main food ingredients;
mixing the blended food ingredients with binder ingredient(s);
heating the mixture to a temperature of from 50 to 100 °C, thereby heat-treating the binder ingredient(s) to provide a heat-treated mixture comprising binder component;
forming the heat-treated mixture to provide a formed product shape; and
dehydrating the formed product shape to provide a baked crisp product, whereby during the heating and dehydrating the ingredients are converted to corresponding components;
wherein the baked crisp product consists of:
   main food component in an amount of from 95 to 99.9% by total dry component weight, wherein the main food component consists of two or more components selected from the group consisting of vegetable, fruit, meat,
   the main food component consisting of:
      vegetable in an amount of from 0 to 97% by total dry component weight;
      fruit in an amount of from 0 to 65% by total dry component weight;
      meat in an amount of from 0 to 97% by total dry component weight;
      dairy and eggs in an amount of from 0 to 97% by total dry component weight; and
   binder component in an amount of from 0.1 to 5% by total dry component weight;
wherein the baked crisp product has a sugar content of less than 40%, a fat content of less than 40%, and a starch content of less than 10% by weight, and
wherein the binder ingredient comprises unrefined psyllium to provide a binder component comprising unrefined heat-treated psyllium in an amount of from 50 to 100% w/w of the binder component.

According to a second aspect of the present invention there is provided a method of producing a baked crisp product for human consumption, the method comprising:
providing a binder composition comprising binder ingredient(s) and water;
heating the binder composition to a temperature of from 50 to 100 °C, thereby heat-treating the binder ingredient(s) to provide a heat-treated binder composition comprising binder component and water;
providing blended food ingredients, wherein food ingredients include main food ingredients and optionally other food ingredients;
mixing the blended food ingredients and optionally also unblended food ingredients with the heat-treated binder composition to provide a heat-treated mixture;
forming the heat-treated mixture to provide a formed product shape; and
dehydrating the formed product shape to provide a baked crisp product, whereby during the heating and dehydrating the ingredients are converted to corresponding components;
wherein the baked crisp product consists of:
   main food component in an amount of from 95 to 99.9% by total dry component weight, wherein the main food component consists of two or more components selected from the group consisting of vegetable, fruit, meat,
   the main food component consisting of:
      vegetable in an amount of from 0 to 97% by total dry component weight;
      fruit in an amount of from 0 to 65% by total dry component weight;
      meat in an amount of from 0 to 97% by total dry component weight;
      dairy and eggs in an amount of from 0 to 97% by total dry component weight;
   other food component in an amount of from 0 to 5% by total dry component weight; and
   binder component in an amount of from 0.1 to 5% by total dry component weight;
wherein the baked crisp product has a sugar content of from 0 to 40%, a fat content of from 0 to 40%, and a starch content of 0 to 10% by weight, and
wherein the binder ingredient comprises unrefined psyllium to provide a binder component comprising unrefined heat-treated psyllium in an amount of from 50 to 100% w/w of the binder component.

This aspect of the invention may provide a method of producing a baked crisp product for human consumption, the method comprising:
providing a binder composition comprising binder ingredient(s) and water;
heating the binder composition to a temperature of from 50 to 100 °C, thereby heat-treating the binder ingredient(s) to provide a heat-treated binder composition comprising binder component and water;
providing blended food ingredients, wherein food ingredients include main food ingredients;
mixing the blended food ingredients with the heat-treated binder composition to provide a heat-treated mixture;
forming the heat-treated mixture to provide a formed product shape; and
dehydrating the formed product shape to provide a baked crisp product, whereby during the heating and dehydrating the ingredients are converted to corresponding components;
wherein the baked crisp product consists of:
   main food component in an amount of from 95 to 99.9% by total dry component weight, wherein the main food component consists of two or more components selected from the group consisting of vegetable, fruit, meat,
   the main food component consisting of:
      vegetable in an amount of from 0 to 97% by total dry component weight;
      fruit in an amount of from 0 to 65% by total dry component weight;
      meat in an amount of from 0 to 97% by total dry component weight;
      dairy and eggs in an amount of from 0 to 97% by total dry component weight;
   other food component in an amount of from 0 to 5% by total dry component weight; and
   binder component in an amount of from 0.1 to 5% by total dry component weight;
wherein the baked crisp product has a sugar content of from 0 to 40%, a fat content of from 0 to 40%, and a starch content of 0 to 10% by weight, and
wherein the binder ingredient comprises unrefined psyllium to provide a binder component comprising unrefined heat-treated psyllium in an amount of from 50 to 100% w/w of the binder component.

In some embodiments of the second aspect, at least some of the blended food ingredients are heat-treated before mixing with the heat-treated binder composition. For example, the blended food ingredients may be heated to a temperature of from 50 °C to 100 °C before mixing with the heat-treated binder composition. In some embodiments, after heating, the blended food ingredients are cooled before mixing with the heat-treated binder composition. In some embodiments, after heating, the blended food ingredients are not cooled. In some embodiments, the blended food ingredients have a temperature of from 50 °C to 100 °C when mixed with the heat-treated binder composition. In some embodiments, after mixing the blended food ingredients and optionally also unblended food ingredients with the heat-treated binder composition to provide a heat-treated mixture, the heat-treated mixture is heated before forming the heat-treated mixture to provide a formed product shape.

In some embodiments of the first or second aspect, the method comprises adding further binder component to the heat-treated mixture.

In some embodiments of the first or second aspect, the heat-treated mixture has a water content of at least 80% before dehydrating.

In some embodiments of the first or second aspect, the forming of the heat-treated mixture comprises shaping the heat-treated mixture into a sheet with a thickness equal to or less than 5 mm.

In some embodiments of the first or second aspect, at least some of the provided blended food ingredients are cooked.

In some embodiments of the first or second aspect, dehydrating the mixture comprises heating the mixture to a temperature of from 40 to 120 °C.

In some embodiments of the first or second aspect, dehydrating the mixture is carried out for a duration of from 1 hour to 10 hours.

According to a third aspect not part of the present invention, there is provided a baked crisp product obtainable from the method described above.

According to a fourth aspect of the present invention, there is provided a baked crisp product for human consumption, the baked crisp product consisting of:
main food component in an amount of from 95 to 99.9% by total dry component weight, wherein the main food component consists of two or more components selected from the group consisting of vegetable, fruit, meat,
the main food component consisting of:
   vegetable in an amount of from 0 to 97% by total dry component weight;
   fruit in an amount of from 0 to 65% by total dry component weight;
   meat in an amount of from 0 to 97% by total dry component weight;
   dairy and eggs in an amount of from 0 to 97% by total dry component weight;
other food component in an amount of from 0 to 5% by total dry component weight; and
binder component in an amount of from 0.1 to 5% by total dry component weight;
wherein the baked crisp product has a sugar content of from 0 to 40%, a fat content of from 0 to 40%, and a starch content of 0 to 10% by weight, and
wherein the binder component comprises unrefined heat-treated psyllium in an amount of from 50 to 100% w/w of the binder component.

This aspect of the invention may provide a baked crisp product for human consumption, the baked crisp product consisting of:
main food component in an amount of from 95 to 99.9% by total dry component weight, wherein the main food component consists of two or more components selected from the group consisting of vegetable, fruit, meat,
the main food component consisting of:
   vegetable in an amount of from 0 to 97% by total dry component weight;
   fruit in an amount of from 0 to 65% by total dry component weight;
   meat in an amount of from 0 to 97% by total dry component weight;
   dairy and eggs in an amount of from 0 to 97% by total dry component weight; and
binder component in an amount of from 0.1 to 5% by total dry component weight;
wherein the baked crisp product has a sugar content of less than 40%, a fat content of less than 40%, and a starch content of less than 10% by weight, and
wherein the binder component comprises unrefined heat-treated psyllium in an amount of from 50 to 100% w/w of the binder component.

In some embodiments, 50% to 100% of the main food component is formed of wholefood components.

The main food component consists of two or more components selected from the group consisting of vegetable, fruit, meat.

The main food component may comprise vegetable selected from the group consisting of butternut squash, carrot, onion, parsnip, bell pepper, chili pepper, tomato, artichoke, asparagus, avocado, broccoli, cauliflower, potato, sweet potato, yam, pumpkin, marrow, aubergine, cucumber, spring onion, chive, garlic, leek, beetroot, celery, endive, spinach, kale, seaweed, cabbage, Brussels sprouts, watercress, chard, fennel, olive, kidney bean, navy bean, pinto bean, haricot bean, lima bean, butter bean, mung bean, runner bean, ricebean, broad bean, field bean, soybean, garden pea, field pea, corn kernel (including sweetcom), chickpea, black-eyed pea, lentil, poppy seed, sesame seed, sunflower seed, pumpkin seed, hemp seed, or a combination thereof.

The main food component may comprise fruit selected from the group consisting of cranberry, goji berry, grape, cherry, strawberry, raspberry, blackberry, blackcurrant, boysenberry, elderberry, redcurrant, damson, plum, gooseberry, mulberry, chokeberry, amla berry, rhubarb, date, apple, pear, orange, lemon, lime, grapefruit, tangerine, satsuma, banana, mango, kiwi fruit, kumquat, lychee, papaya, melon, water melon, apricot, peach, nectarine, coconut, fig, pineapple, pomegranate, almonds, chestnuts, hazelnuts, pecans, pistachios, walnuts, Brazil nuts, cashew nuts, macadamia nuts, peanuts, pine nuts, or a combination thereof..

The main food component may comprise meat selected from the group consisting of chicken, beef, pork, lamb, fish, and combinations thereof.

In embodiments not part of the present invention the main food component may comprise dairy and or egg components selected from the group consisting of milk, powdered milk, cream, crème fraiche, condensed or concentrated milk products, yoghurt, butter, cheese, fresh egg, powdered egg, powdered egg yolk, powdered egg white and combinations thereof.

In some embodiments, the other components are selected from the group consisting of salt, sweeteners, herbs, spices, and combinations thereof.

In some embodiments, the baked crisp product has a thickness of less than 5 mm, and/or a fracturability of from 1 N to 10 N, and/or a moisture content of less than 10%.

In some embodiments, the binder component consists of psyllium. In particular cases, the binder component consists of unrefined heat-treated psyllium.

To the extent that they are compatible, features disclosed herein in relation to one aspect of the invention are explicitly disclosed in combination with each and every other aspect.

Further features and advantages of the invention will become apparent from the following description of preferred embodiments of the invention, given by way of example only, which is made with reference to the accompanying drawings.

### Brief Description of the Drawings

Figure 1 is a flow diagram showing the steps of a method of producing a baked crisp product according to the present invention.

### Detailed Description

Unless otherwise specified, in the specification and claims, all percentages are percentages by weight and all temperatures are in degrees Centigrade (degrees Celsius).

'Baked crisp product' as used herein refers to a product with a mixture of ingredients consumable by humans which has been subjected to a baking process and has a crisp texture. A baking process involves the application of heat in a heated air environment, for example in an oven, which cooks and dehydrates the mixture. In particular, baked crisp product may refer to a foodstuff which has been processed and formed. That is, during the manufacture of the food product, the mixture may be subjected to a forming process, such as moulding, pressing, deposition, extrusion, or a combination thereof, to provide a formed baked crisp product of the desired shape. Forming may further include cutting a moulded, pressed, deposited or extruded composition to provide a formed baked crisp product of the desired shape.

'Baking' or 'baking process' as used herein includes the application of heat in a heated air environment wherein the heated air environment is at a relatively low temperature. For example, baking includes the application of heat in a heated air environment at a temperature of around 30 °C. In such examples, the baking process will predominantly comprise dehydration. Baking and dehydrating are used interchangeably throughout, although baking in general refers to dehydrating at a raised temperature.

Baked crisp products suitable for human consumption as contemplated herein must have organoleptic properties which a human would find acceptable. Acceptable organoleptic properties may include certain levels of savouriness, sweetness, moisture, crispness, mouthfeel, and conventional flavour combinations. The requirements for food products suitable for human consumption are, for example more demanding than for food products suitable for animal consumption (such as livestock and pets).

In many baked crisp products, a grain-derived flour component may need to be included to provide a product with acceptable flavour, mouthfeel, binding and texture. Alternatively or additionally, components comprising gluten may be included in such products to aid in binding. Therefore, many baked crisp products comprise wheat flour or other grain. A separate fat component is also routinely included. Surprisingly, it has been found that these conventional base components, including wheat flour, may be omitted from a baked crisp product by including binder ingredients as described herein. Baked crisp products according to the present invention have satisfactory flavour, mouthfeel, binding and texture. These may have a lower carbohydrate, sugar and/or gluten fat content than conventional baked crisp products.

In other baked and fried food products where a crisp texture is desired, starchy roots and tubers such as potato, sweet potato, yam, parsnip, beetroot, cassava are required. The starchy roots and tubers are either cut into thin slices and baked/fried intact to provide crisp food products, or processed and formed into product shapes. The baked crisp products of the present invention have a low starch content, and do not rely on starchy roots and tubers to bind ingredients or to contribute to the crisp texture of the food product. The crisp food products of the present invention may include starchy roots and tubers, but only to the extent that the starch content of the whole product is less than 10% by weight.

As employed herein, "component" and "ingredient" are used with similar and cognate meaning and sometimes interchangeably, but the term "component" focuses on the matter which is present in the baked crisp product, whereas the term "ingredient" focuses on the state as starting materials for the method according to the present invention, thus after any initial processing but before heating, mixing and baking.

In one aspect, the present invention relates to baked crisp products for human consumption. The baked crisp products of the present invention consist of main food component, other food component, and binder component.

### Binder component

The baked crisp product comprises binder component in an amount of from 0.1% to 5% by dry weight. For example, the baked crisp product may comprise binder component in an amount of at least 0.2%, 0.3%, 0.4%, 0.5%, 0.75%, 1%, 1.5%, 2%, 2.5%, 3%, 3.5%, 4%, 4.5% or 5%. In some examples, the baked crisp product may comprise binder component in an amount of less than 5%, 4.5%, 4%, 3.5%, 3%, 2.5%, 2%, 1.5%, 1%, 0.75%, or 0.5%.

The binder component comprises unrefined heat-treated psyllium. As used herein, "psyllium" refers to plants of the subgenus *Psyllium* in the genus *Plantago,* including species such as *Plantago afra* L. (African plantain, or black psyllium), *Plantago arenaria* Waldst. & Kit. (branched plantain, also known as French psyllium or sand plantain), *Plantago lanceolate* L. (buckhorn, also known as ribgrass, or ribwort), *Plantago ovata* Forssk. (blond psyllium, also known as blond plantain, ispaghul, isabgol, or desert Indianwheat), *Plantago sempervirens* Crantz (evergreen plantain, also knowns as shrubby plantain), among others.

Any part of the psyllium plant may be used as a binder ingredient. For example, in some embodiments, the binder ingredient may comprise psyllium seed. In other embodiments, the binder ingredient may comprise psyllium seed husk (that is, husk which has been mechanically separated from the psyllium seed). Suitable psyllium seed husk may be purchased as Metamucil ^{®} from the vendor Proctor & Gamble.

As used herein, "unrefined" refers to matter which has not been chemically extracted. In some embodiments, binder ingredients may comprise unrefined, intact psyllium.

That is, the psyllium ingredient has not been mechanically processed or chemically extracted. The term 'intact' refers to an untreated part of a plant, and does not necessarily refer to the entire plant. Examples of intact plant materials include the leaf, stem or seed of a plant. In another embodiment, binder ingredients may comprise unrefined psyllium which has been exposed to mechanical processing. In some embodiments, the unrefined psyllium may be milled, ground, micronized, cracked, rolled or flaked. For example, binder ingredients may include unrefined psyllium flour.

In some embodiments, the unrefined psyllium is a wholefood component. As used herein, "wholefood" components refer to food matter which contains all of the components or derivatives of the components of the starting food material that are considered edible and palatable. As needed or desired, the inedible or unpalatable parts of the starting material may be removed in whole or in part, for example the skin, peel, pips, stones and the like. Otherwise, however, all of the components or derivatives of the components of the edible and palatable part of the starting food material are retained in the wholefood component. In particular, if an ingredient is subjected to a heating step in a liquid medium, then the wholefood component deriving from that ingredient includes all the matter which may be retained as solid matter as well as any matter which is dissolved and/or suspended in the liquid medium. Thus, if an ingredient is heated in water, then the wholefood component includes the solid material retained after heating as well as any matter which is extracted from the ingredient into the water.

For the avoidance of doubt, "wholefood" does not necessarily refer to a whole plant or vegetable. Parts of plants or vegetables, such as seeds or seed husks, may be used as ingredients to provide wholefood components so long as all of the ingredient used in preparing the baked crisp product is retained in the baked crisp product as a wholefood component.

Preferably, the binder component comprises unrefined, wholefood, heat-treated psyllium. By heating binder ingredient, it is converted to binder component. Surprisingly, the inventor has found that it is not necessary to chemically extract or mechanically remove components of psyllium for it to be used effectively as a binder in a baked crisp product for humans. Advantageously, the use of unrefined, wholefood, heat-treated psyllium as a binder component may simplify the process of producing a baked crisp product because it obviates the need for separation and extraction steps which may be expensive, time-consuming, and require large amounts of energy.

The unrefined psyllium component in the baked crisp products of the present invention derives from unrefined psyllium ingredient which is heat-treated during the method of producing the baked crisp product. Surprisingly, the inventor has found that heat treating psyllium can improve its use as a binder. For example, heat-treated psyllium may exhibit greater binding capability, more palatable mouthfeel, and/or more palatable flavour. In particular, it has been found that unrefined heat-treated binder can more effectively bind food components than other non-starch binders known in the art.

Preferably, the heat treatment of psyllium is carried out in the presence of water. Some or all of the water may derive from blended ingredients; further water may optionally be added. Heat treatment of psyllium in water may extract components of the psyllium into the water which may contribute to the binding effect of psyllium. In a preferred embodiment, psyllium is heated in the present of water and is retained in the baked crisp product as wholefood heat-treated psyllium component.

The binder component comprises unrefined heat-treated psyllium in an amount of from 50 to 100% w/w of the binder component. For example, the binder component may comprise unrefined heat-treated psyllium in an amount of at least 55%, 60%, 70%, 75%, 80%, 85%, 90%, 95%, 96%, 97%, 98%, 99%, or 100% w/w of the binder component. In some embodiments, the binder component consists of unrefined heat-treated psyllium.

In some embodiments, the binder component comprises unrefined heat-treated psyllium in an amount of less than 100%, 95%, 90%, 85%, 80%, 75%, 70%, 65%, 60%, or 55%.

Alongside the unrefined heat-treated psyllium, the binder component may also comprise guar, spinach, fenugreek, slippery elm, konjac, locust bean gum, carrageenan or a combination thereof. In some embodiments, the binder component consists of psyllium and one or more of guar, spinach, fenugreek, slippery elm, konjac, locust bean gum, and carrageenan. In preferred embodiments, the binder comprises a combination of psyllium and guar, or psyllium and slippery elm. The binder may consist of a combination of psyllium and guar, or psyllium and slippery elm.

The binder component may comprise guar, spinach, fenugreek, slippery elm, konjac, locust bean gum, carrageenan or a combination thereof in an amount of from 0 to 50% w/w of the binder component. For example, the binder component may comprise guar, spinach, fenugreek, slippery elm, konjac, locust bean gum, carrageenan or a combination thereof in an amount of less than 50%, 45%, 40%, 35%, 30%, 25%, 20%, 15%, 10%, 5%, 4%, 3%, 2%, or 1%.

In some examples, the binder component consists of unrefined component(s). In some examples, the binder component consists of a combination of heat-treated components and components which have not been subjected to a heat treatment in the method of producing the baked crisp product.

It is possible to provide a baked food product by using alternative binders in place of heat-treated psyllium. For example, it is possible to provide baked food products comprising konjac gum, carrageenan, Locust bean gum or Vege-Gel^{®} (a product available from Dr Oetker, UK, containing carrageenan and Locust bean gum) as binder, in place of heat-treated psyllium. However, such baked food products are inferior to the baked crisp products of the present invention which comprise heat-treated psyllium as binder. For example, the baked crisp products of the present invention may exhibit more desirable flavour, mouthfeel and/or texture (such as crispness) than baked food products containing alternative binders.

### Main food component

As stated above, the baked crisp products of the present invention consist of main food component, optionally other food component, and binder component.

The main food component forms 95 to 99.9% by dry weight of the baked crisp product, such as at least 96%, 97%, 98%, 99%, or 99.5%. The main food component consists of food falling within the categories of vegetable, fruit, meat.

As used herein, "fruit" and "vegetable" are to be understood in the commercial meaning of fruit and vegetables as those products which are conventionally categorised as greengrocer's products, and not in the botanical sense. The distinction between fruit and vegetable herein follows the conventional categorisation of greengrocer's products. The term "fruit" as used herein refers to culinary fruit, typically referring to products with a sweet or sour taste, and/or products which are conventionally used in sweet dishes such as a dessert course of a meal. Accordingly, the term "fruit" as used herein may include products which would not be classed as fruit in a botanical sense, such as rhubarb. Similarly, the term "fruit" includes ingredients which are referred to as "nuts" in a culinary sense. Accordingly, alongside hazelnuts, chestnuts and other botanical nuts, "nut" as used herein also includes almonds, pecans, pistachios, walnuts, Brazil nuts, cashew nuts, macadamia nuts, peanuts, pine nuts and so on, which are not nuts in a botanical sense but are commonly referred to as nuts in a culinary sense.

The main food component contains fruit in an amount of from 0 to 65% by total dry component weight. For example, the main food component may contain fruit in an amount of at least 5%, 10%, 15%, 20%, 25%, 30%, 35%, 40%, 45%, 50%, 55%, or 60% by total dry component weight. In some examples, the main food component may contain fruit in an amount of less than 60%, 55%, 50%, 45%, 40%, 35%, 30%, 25%, 20%, 15%, 10%, or 5% by total dry component weight. In some examples, the main food component does not contain fruit.

Particular fruit suitable for use in the present invention include cranberry, goji berry, grape (for example in the form of raisin, sultana, or currant), cherry, strawberry, raspberry, blackberry, blackcurrant, boysenberry, elderberry, redcurrant, damson, plum, gooseberry, mulberry, chokeberry, amla berry, rhubarb, date, apple, pear, orange, lemon, lime, grapefruit, tangerine, satsuma, banana, mango, kiwi fruit, kumquat, lychee, papaya, melon, water melon, apricot, peach, nectarine, coconut, fig, pineapple, pomegranate, almonds, chestnuts, hazelnuts, pecans, pistachios, walnuts, Brazil nuts, cashew nuts, macadamia nuts, peanuts, pine nuts, and combinations thereof.

In some embodiments, the fruit comprise cranberry, goji berry, grape (for example in the form of raisin, sultana, or currant), cherry, strawberry, raspberry, blackberry, blackcurrant, boysenberry, elderberry, redcurrant, damson, plum, gooseberry, mulberry, chokeberry, amla berry, rhubarb, date, apple, pear, orange, lemon, lime, grapefruit, tangerine, satsuma, banana, mango, kiwi fruit, kumquat, lychee, papaya, melon, water melon, apricot, peach, nectarine, coconut, fig, pineapple, pomegranate, almonds, chestnuts, hazelnuts, pecans, pistachios, walnuts, Brazil nuts, cashew nuts, macadamia nuts, peanuts, pine nuts, or a combination thereof.

In some embodiments, the fruit consist of cranberry, goji berry, grape (for example in the form of raisin, sultana, or currant), cherry, strawberry, raspberry, blackberry, blackcurrant, boysenberry, elderberry, redcurrant, damson, plum, gooseberry, mulberry, chokeberry, amla berry, rhubarb, date, apple, pear, orange, lemon, lime, grapefruit, tangerine, satsuma, banana, mango, kiwi fruit, kumquat, lychee, papaya, melon, water melon, apricot, peach, nectarine, coconut, fig, pineapple, pomegranate, almonds, chestnuts, hazelnuts, pecans, pistachios, walnuts, Brazil nuts, cashew nuts, macadamia nuts, peanuts, pine nuts, or a combination thereof

The main food component contains vegetable in an amount of from 0 to 97% by total dry component weight. For example, the main food component may contain vegetable in an amount of at least 5%, 10%, 15%, 20%, 25%, 30%, 35%, 40%, 45%, 50%, 55%, 60%, 65%, 70%, 75%, 80%, 85%, 90%, or 95% by total dry component weight. In some examples, the main food component may contain vegetable in an amount of less than 95%, 90%, 80%, 75%, 70%, 65%, 60%, 55%, 50%, 45%, 40%, 35%, 30%, 25%, 20%, 15%, 10%, or 5% by total dry component weight. In some examples, the main food component does not contain vegetable.

The term "vegetable" as used herein refers to culinary vegetables, typically referring to products with a generally savoury or less sweet taste, and/or products which are conventionally used in savoury dishes such as a main course of a meal. Accordingly, the term "vegetable" as used herein may include products which would not be classed as vegetables in a botanical sense, such as avocado, aubergine, capsicum (including bell pepper and chilli pepper), cucumber, olive, squash (including butternut squash, marrow, courgette, and pumpkin), and tomato.

Vegetable may include starchy roots and tubers such as potato, sweet potato, yam, parsnip, beetroot, cassava. However, they may only be present in the baked crisp product in an amount which satisfies the required starch content. In some embodiments, the baked crisp product does not contain starchy roots and/or tubers.

Similarly, vegetable may include grains such as wheat flour, maize flour (commeal) etc., but they may only be present in the baked crisp product in an amount which satisfies the required starch content. In some embodiments, the baked crisp product does not contain grain. In particular embodiments, the baked crisp product does not contain wheat flour, maize flour, or gram flour.

Vegetable may include pulses and/or seeds. As used herein, the terms 'pulses' and 'seeds' are used in a culinary sense. Suitable pulses may include kidney beans, navy beans, pinto beans, haricot beans, lima beans, butter beans, mung beans, runner beans, ricebeans, broad beans, field beans, soybean, garden peas, field peas, corn kernels (including sweetcorn) chickpeas, black-eyed peas, lentils, and the like. 'Seeds' include edible seeds which are not classed as pulses or nuts in a culinary sense, such as poppy seed, sesame seed, sunflower seed, pumpkin seed, hemp seeds, and the like. Again, pulses and seeds may only be present in the baked crisp product in an amount which satisfies the required starch content. In some examples, the baked crisp product does not include pulses and/or seeds.

Particular vegetables suitable for use in the present invention include butternut squash, carrot, onion (for example as shallot), bell pepper, chili pepper, tomato (for example as purée, granules, passata, or sundried tomatoes), artichoke, asparagus, avocado, broccoli, cauliflower, potato, sweet potato, yam, pumpkin, marrow (including courgette, also referred to as zucchini), aubergine, cucumber, spring onion, chive, garlic, leek, beetroot, celery, endive, spinach, kale, seaweed, cabbage, Brussels sprouts, watercress, chard, fennel, olive, pulses, seeds (such as sesame seeds), and combinations thereof.

**In** some embodiments, the vegetables comprise butternut squash (for example as purée), carrot, onion (for example as shallot), parsnip, bell pepper, chili pepper, tomato (for example as purée, granules, passata, or sundried tomatoes), artichoke, asparagus, avocado, broccoli, cauliflower, potato, sweet potato, yam, pumpkin, marrow (including courgette, also referred to as zucchini), aubergine, cucumber, spring onion, chive, garlic, leek, beetroot, celery, endive, spinach, kale, seaweed, cabbage, Brussels sprouts, watercress, chard, fennel, olive, kidney bean, navy bean, pinto bean, haricot bean, lima bean, butter bean, mung bean, runner bean, ricebean, broad bean, field bean, soybean, garden pea, field pea, corn kernel (including sweetcom), chickpea, black-eyed pea, lentil, poppy seed, sesame seed, sunflower seed, pumpkin seed, hemp seed, or a combination thereof.

In some embodiments, the vegetables consist of butternut squash (for example as purée), carrot, onion (for example as shallot), parsnip, bell pepper, chili pepper, tomato (for example as purée, granules, passata, or sundried tomatoes), artichoke, asparagus, avocado, broccoli, cauliflower, potato, sweet potato, yam, pumpkin, marrow (including courgette, also referred to as zucchini), aubergine, cucumber, spring onion, chive, garlic, leek, beetroot, celery, endive, spinach, kale, seaweed, cabbage, Brussels sprouts, watercress, chard, fennel, olive, kidney bean, navy bean, pinto bean, haricot bean, lima bean, butter bean, mung bean, runner bean, ricebean, broad bean, field bean, soybean, garden pea, field pea, corn kernel (including sweetcom), chickpea, black-eyed pea, lentil, poppy seed, sesame seed, sunflower seed, pumpkin seed, hemp seed, or a combination thereof.

The main food component contains meat in an amount of from 0 to 97% by total dry component weight. For example, the main food component may contain meat in an amount of at least 5%, 10%, 15%, 20%, 25%, 30%, 35%, 40%, 45%, 50%, 55%, 60%, 65%, 70%, 75%, 80%, 85%, 90%, or 95% by total dry component weight. In some examples, the main food component may contain vegetable in an amount of less than 95%, 90%, 85%, 80%, 75%, 70%, 65%, 60%, 55%, 50%, 45%, 40%, 35%, 30%, 25%, 20%, 15%, 10%, or 5% by total dry component weight. In some examples, the main food component does not include meat.

As used herein, 'meat' refers to edible parts (including blood) of animals including, but not limited to, domestic ungulates (such as sheep, cattle, and swine), poultry (such as chicken, turkey, and duck), lagomorphs (such as rabbit), fish (such as white fish, salmon, mackerel, sardine, trout, herring, tuna), wild game, farmed game, small wild game and large wild game, and generally corresponds to the definition of 'meat' in EU Regulation No. 853/2004. In particular embodiments, meat ingredients may be selected from the flesh of chicken, beef, pork, lamb, fish, and combinations thereof.

In embodiments not part of the present invention the The main food component contains dairy and eggs in an amount of from 0 to 65% by total dry component weight. For example, the main food component may contain meat in an amount of at least 5%, 10%, 15%, 20%, 25%, 30%, 35%, 40%, 45%, 50%, 55%, or 60% by total dry component weight. In some examples, the main food component may contain vegetable in an amount of less than 60%, 55%, 50%, 45%, 40%, 35%, 30%, 25%, 20%, 15%, 10%, or 5% by total dry component weight. In some examples, the main food component does not contain dairy and eggs.

The term "dairy" as used herein refers to food products made exclusively or principally from the lacteal secretion obtained from one or more healthy milk-producing animals, e.g., cows, goats, sheep, and water buffalo. Dairy ingredients include, but are not limited to, milk, powdered milk, cream, crème fraiche, condensed or concentrated milk products, cultured or acidified milk or milk products, kefir, eggnog, yoghurt, butter, cheese, whey, condensed or dry whey or whey products. In particular embodiments, dairy ingredients may be selected from milk, powdered milk, cream, crème fraiche, condensed or concentrated milk products, yoghurt, butter, cheese and combinations thereof.

"Eggs" refer to edible bird eggs, such as those from chicken. duck, quail, and goose. Egg ingredients may include the egg yolk and egg white, egg yolk alone, egg white alone (also referred to as egg protein), or ingredients derived therefrom. In some examples, an egg ingredient consists of egg yolk and egg white. Egg ingredients can be provided as fresh egg, or dried egg (such as powdered egg, powdered egg yolk, or powdered egg white).

In some embodiments, not part of the present invention the main food component consists of components selected from at least 2, 3 or 4 of the categories of vegetable, fruit, meat, and dairy and eggs. For example, the main food component may consist of components selected from vegetable and fruit; vegetable and meat; vegetable and dairy and eggs; fruit and meat; fruit and dairy and eggs; meat and dairy and eggs; vegetable, fruit and meat; vegetable, fruit and dairy and eggs; vegetable, meat and dairy and eggs; fruit, meat and dairy and eggs; or vegetable, fruit, meat and dairy and eggs.

In some embodiments, 50 to 100% of the main food component is wholefood component. For example, the main food component may be formed of wholefood components in an amount of at least 50%, 55%, 60%, 65%, 70%, 75%, 80%, 85%, 90%, or 95%. In some examples, the main food component consists of wholefood components.

### Optional food component

The baked crisp product may optionally comprise other food components, deriving from other food ingredients.

Other food ingredients refer generally to those not included within the definition of main food ingredient as described above. Other food ingredients may include flavourings, such as salt, sweeteners, herbs and spices. Suitable sweeteners for use in the present invention may include sucrose, glucose, stevia, lo han guo, xylitol, sorbitol, or a combination thereof. Sweeteners are, however, preferably not included in the baked crisp product according to the present invention. Suitable herbs and spices for use in the present invention may include asafoetida, basil, cardamom, cinnamon, cloves, coriander, cumin, fennel seeds, fenugreek, galangal, ginger, mustard, nutmeg, oregano, paprika, pepper (peppercorns), sage, star anise, rosemary, thyme, turmeric, wasabi, or a combination thereof. Said other food ingredients may constitute 0 to 5% of the baked crisp product by ingredient dry weight. Preferably, the other food ingredient may constitute 0 to 3% of the baked crisp product by ingredient dry weight, or 0 to 2%, or 0 to 1%. In some embodiments, the baked crisp product does not contain any other food components.

### Physical properties of baked crisp product

The baked crisp products have a product shape. In some embodiments, the product has one dimension noticeably smaller than the other two dimensions. For example, the product may have a thickness which is noticeably smaller than the height and width of the product. In these embodiments, the product is preferably substantially planar.

The product may have any suitable shape, such as a rectangular sheet or disc. Suitable rectangular sheets may have a height which is the same as the width (i.e. square), or greater than the width. The height is suitably not more than 200% of the width. Suitable discs may be roughly circular, or oblate with a major axis (corresponding to the height) which is at least 110% of the minor axis (corresponding to the width) but not more than 200% of the minor axis. For a circular disc, the width will correspond to the diameter of the disc.

In suitable examples, the baked crisp product has a height and/or width of from 0.5 cm to 10 cm, or 1 cm to 8 cm, or 2 cm to 6 cm, or around 4 cm. In some examples, the baked crisp product has a height and/or width of at least 0.5 cm, 1 cm, 1.5 cm, 2 cm, 2.5 cm, 3 cm, 4 cm, or 5 cm. In some examples, the baked crisp product has a height and/or width of less than 10 cm, 9 cm, 8 cm, 7 cm, 6 cm, 5 cm, 4 cm, or 3 cm.

The thickness of the baked crisp product is the smallest dimension of the product (smaller than the height and width), and is measured as the distance between opposing surfaces in that dimension. The thickness of the product as used herein relates to the thickest part of the product.

In some embodiments, the baked crisp product has a thickness of less than 5 mm. For example, the baked crisp product may have a thickness of less than 4.5 mm, 4 mm, 3.5 mm, 3 mm, 2.5 mm, 2 mm, 1.5 mm, 1 mm, or 0.5 mm. Surprisingly, the inventor has found that by using a binder component comprising unrefined heat-treated psyllium, it is possible to bind ingredients and provide a baked crisp product which is substantially thinner than was previously known in the art. Further, the products of the present invention which contain unrefined heat-treated psyllium have a crisp texture.

A measure of the crispness of a baked food product may be the fracturability of the snack food product. The terms "fracturability" and "crispness" are used interchangeable in the art and defined as the force with which a sample cracks, fractures, or crumbles. Fracturability can be associated with the suddenness with which the food breaks, for example.

Foods having fracturability have some degree of hardness. Hardness can be defined as the force required to completely break a product. It may be in some examples that a food product fractures before it completely breaks, in which case the fracturability and hardness will differ. In other examples, a food product may fracture and immediately break, in which case the fracturability and hardness of the sample will be the same.

Foods having fracturability also have some degree of flexibility. Flexibility can be defined as the distance a food product bends before it completely breaks (i.e. the distance travelled in measuring hardness).

In general, crispness is characterized by a brittle fracture (i.e. having low flexibility) at low fracture force with the concomitant emission of sound.

Fracturability, hardness and flexibility may be measured with any suitable texture analyser, such as a TA-XT plus texture analyser, available from Stable Micro Solutions, UK. In particular, the fracturability, hardness and flexibility of a baked crisp product may be measured by carrying out burst tests with a texture analyser in combination with a Crisp Fracture Support.

Surprisingly, it has been found that the products of the present disclosure exhibit desirable fracturability, hardness and/or flexibility. Without being bound by theory, it is believed that the use of heat-treated psyllium as binder and/or preparing the baked food product from a heat-treated mixture having a very high water content provides a thin baked food product with desirable fracturability, hardness and/or flexibility.

It is common in the art to express fracturability in "gram-force" (g), i.e. the magnitude of the force exerted on one gram of mass in standard gravity. Fracturability may also be expressed in newtons (N), or millinewtons (mN). Both units are used herein; 1 g is approximately equal to 9.8 mN.

In some examples, the baked crisp product has a fracturability of from 100 g to 1000 g, or from 200 g to 800 g, or from 300 to 600 g, or from 350 g to 500 g, or from 400 to 450 g. For example, the baked crisp product may have a fracturability of at least 100 g, 200 g, 300 g, or 400 g. In some examples, the baked crisp product may have a fracturability of less than 1000 g, 900 g, 800 g, 700 g, 600 g, 500 g, or 450 g.

Put another way, the baked crisp product may have a fracturability of from 1 N to 10 N, of from 2 N to 8 N, or from 3 N to 6 N, or from 4 N to 5 N. For example, the baked crisp product may have a fracturability of at least 1 N, 2 N, 3 N, or 4 N. In some examples, the baked crisp product may have a fracturability of less than 10 N, 9 N, 8 N, 7 N, 6 N, or 5 N.

In some examples, the baked crisp product may have a hardness corresponding to any of the fracturability values given above.

The baked crisp product may have a flexibility of from 0.5 mm to 10 mm, or from 0.75 mm to 7.5 mm, or from 1 mm to 5 mm, or from 1.5 mm to 3 mm, or around 2 mm. In some examples, the baked crisp produce may have a flexibility of at least 0.5 mm, 0.75 mm, 1 mm, 1.25 mm, 1.5 mm, 1.75 mm, or 2 mm. In some examples, the baked crisp product may have a flexibility of less than 10 mm, 9 mm, 8 mm, 7 mm, 6 mm, 5 mm, 4 mm, or 3 mm.

In particular embodiments, the baked crisp product has a thickness of around 5 mm, or 4.5 mm, or 4 mm, or 3.5 mm, or 3 mm, or 2.5 mm, or 2 mm, or 1.5 mm, or 1 mm, or 0.5 mm, and has a fracturability as set out above, and/or a hardness as set out above, and/or a flexibility as set out above.

The baked crisp products of the present invention may have any suitable moisture content. Preferably, the products have a low moisture content to provide a crisp texture and to maximise shelf life. In some embodiments, the moisture content of the baked crisp products may be less than 10%, 9%, 8%, 7%, 6%, 5%, 4%, 3%, 2%, or 1%. In preferred examples, the baked crisp product has a moisture content of less than 5%.

The baked crisp products of the present invention have a maximum fat content. The products have a fat content of less than 40% by dry weight. In some embodiments, the products have a fat content of less than 35%, 30%, 25%, 20%, 15%, 10%, or 5% by dry weight.

The products also have a maximum sugar content (whereby 'sugar' is taken to mean mono- and disaccharides). The products have a sugar content of less than 40% by dry weight. The product preferably contains sugar in an amount which is insufficient for functioning as a binder component. In some embodiments, the products have a sugar content of less than 35%, 30%, 25%, 20%, 15%, 10%, or 5% by dry weight.

The baked crisp products have a starch content of less than 10% by dry weight. Again, the product preferably contains starch in an amount which is insufficient for functioning as a binder component, In some embodiments, the products contains less than 10%, or 9%, or 8%, or 7%, or 6%, or 5%, or 4%, or 3%, or 2%, or 1%, or 0.5% by dry weight.

In some embodiments, the baked crisp products are low-gluten products. For example, the baked crisp products may have a gluten content of less than 2.5%, 2%, 1.5%, 1%, 0.5%, or 0.1% by dry weight. The baked crisp products may have a gluten content of more than 0.1%, or more than 0.5% by dry weight. In some embodiments, the baked crisp product is essentially free from gluten.

### Method of producing a baked crisp product

The present invention also relates to method of producing a baked crisp product for human consumption. Suitable methods will be explained with reference to Figure 1.

The first step of the method of producing a baked crisp product 100 is providing blended food ingredients 110. Providing blended food ingredients comprises combining and blending a plurality of ingredients.

The ingredients may be blended and combined in any order. For example, in some embodiments, the ingredients may be individually blended and then combined. In other embodiments, the ingredients may be combined and then blended together. In any case, the blended food ingredients form a substantially homogenous mixture.

The ingredients include main food ingredients. Suitable main food ingredients are discussed above. The ingredients may optionally further include other food ingredients. Suitable other food ingredients are also discussed above.

In some examples, the main food ingredients contain cooked ingredients. In some examples, the main food ingredients consists of cooked ingredients. In other examples, the main food ingredients comprise uncooked (raw) ingredients. In some examples, the main food ingredients consist of uncooked (raw) ingredients. In some examples, the main food ingredients comprise cooked and uncooked ingredients.

The method then comprises mixing the blended food ingredients with binder ingredient(s) 120. Suitable binder ingredients include those discussed hereinabove. The binder ingredient comprises unrefined psyllium. The binder ingredient can include unrefined psyllium in an amount of from 50 to 100%, for example, at least 60%, 70%, 80%, 90%, or 95%. In some examples, the binder ingredient consists of unrefined psyllium.

Water may optionally be mixed with the blended food ingredients and binder ingredient(s) at this stage. In any case, whether further water is added to the mixture or not, the mixture preferably has a high water content, and is provided as a slurry. For example, the mixture may have a water content of greater than 80% w/w, or 85% w/w, or 90% w/w.

The method then comprises heating the mixture 130. The mixture is heated to a temperature of from 50 to 100 °C. This step may also be referred to as the "heat-treating" step. It follows that heating the mixture 130 heats the binder ingredient(s) to provide binder component. In particular, the psyllium comprised in the binder ingredient(s) becomes heat-treated psyllium by virtue of the heating step 130.

In some examples, the mixture is heated to a temperature of at least 55 °C, 60 °C, 65 °C, 70 °C, 75 °C, 80 °C, 85 °C, or 90 °C. In some examples, the mixture is heated to a temperature of equal to or less than 95 °C, 85 °C, 80 °C, 75 °C, 70 °C, 65 °C, 60 °C, or 55 °C. In some embodiments, heating above the temperature described herein may adversely affect the flavour profile.

In some examples, the mixture is heated to a temperature of from 50 to 100 °C for at least 1 minute. In some examples, the mixture is heated to a temperature of from 50 to 100 °C for 10 minutes or less. In some examples, the mixture is heated to a temperature of from 50 to 100 °C for a duration of from 1 to 10 minutes, 2 to 8 minutes, or 2 to 6 minutes.

In some examples, the heat-treated mixture is cooled before the dehydration step. For example, the heat-treated mixture may be cooled directly following the heat-treatment step. In some examples, the heat-treated mixture may be cooled to a temperature of less than 90 °C, 70 °C, 50 °C, or 30 °C before the dehydration step. In some examples, the heat-treated mixture may be cooled to a temperature of from 20 °C to 30 °C before the dehydration step. In some examples, the heat-treated mixture may be cooled before the dehydration step to a temperature which is at least about 20 °C, 30 °C, 50 °C, or 80 °C less than the maximum temperature of the mixture during the heat treatment step.

In some examples, the cooling may be achieved actively. For example, active cooling may be achieved by air cooling, such as passing cool air over the mixture. Additionally, or alternatively, active cooling may be achieved by water cooling, such as passing cool water through a coil submerged in the mixture, or passing cool water through a jacket of a vessel containing the mixture. In other examples, the cooling may be achieved passively, such as by stopping the heating of the mixture and allowing the mixture to cool. In other examples, the heat-treated mixture is not cooled before the dehydration step.

The heat-treated mixture may have any suitable moisture content. Preferably, the heat-treated mixture has a moisture content of at least 80% before a baking step is carried out. For example, the heat-treated mixture may have a moisture content of at least 85%, or 90%. Previous methods in the art generally use mixtures with much lower water contents prior to baking. Surprisingly, the inventor has found that by making the product from a mixture having a high moisture content which contains heat-treated psyllium, it is possible to provide products which are thinner and/or crisper than were previously known in the art. After the heat-treatment step, the heat-treated mixture may be blended, for example by stirring, mixing or agitating the mixture.

Further main food ingredients and/or other food ingredients and/or binder ingredients may optionally be added to the heat-treated mixture at this stage. These further ingredients may be blended, may be unblended, or may be partially blended. If the further ingredients are not blended, then they must be liquid or particulate, with a maximum particle size of 1 cm. The heat-treated mixture may be blended after the addition of the further main food ingredients and/or other food ingredients and/or binder ingredients.

The method then comprises forming the heat-treated mixture to provide a formed product shape(s) 140. Food product shapes may be regular or irregular. For example, regular food product shapes may include rectilinear bars, cylindrical bars, patties, wedges and wafers. Regular food product shapes may also include any shape which has been moulded (for instance, heart shapes, flower shapes, tree shapes etc.). Irregular food product shapes may include clusters, shards and drops. The food product shapes may be equal in size relative to each other, or unequal in size relative to each other. In one embodiment, the heat-treated mixture is formed into regular, equal food product shape(s). In another embodiment, the heat-treated mixture is formed into regular, unequal food product shape(s). In another embodiment, the heat-treated mixture is formed into irregular, equal food product shape(s). In another embodiment, the heat-treated mixture is formed into irregular, unequal food product shape(s). In a preferred embodiment, the mixture is formed into wafer or "crisp" shapes.

The food product shape may be formed by any suitable method known in the art. Such methods include, but are not limited to, moulding, pressing, deposition, and extrusion. Some moulding methods can be carried out with a rotary moulder. Some pressing methods can be carried out with food forming machines, such as may be used to make a variety of food forms such as hamburger patties, and generally refers to a machine in which the mixture is pressed into a mould plate and then the food product shapes formed are subsequently knocked out of the mould. Some depositing methods can be carried out with a depositor. Some extrusion methods can be carried out with single screw extruders, twin screw extruders, or pelletizers. Shaping the mixture may also be carried out with food wire cut machines, sheet formers, or rotary cutters. More than one method and/or device for carrying out such a method may be used. In particular, forming the food product shape may first comprise any of the above methods (such as moulding, pressing, depositing or extruding), and then cutting the resulting shaped composition to provide a food product shape.

The food product shape formed in the forming step 140 need not be the shape of the final baked crisp product. For example, forming the heat-treated mixture to provide a formed product shape may include depositing the heat-treated mixture on a sheet or in a mould to provide a thin sheet of heat-treated mixture. The mixture may then be dehydrated to provide a baked crisp product sheet. This sheet may nevertheless be further processed to provide a final baked crisp product with a different shape (for example, the sheet may then be cut to provide smaller baked crisp products).

In some embodiments, the forming step 140 comprises shaping the heat-treated mixture into a sheet having a thickness equal to or less than 5 mm. For example, the sheet may have a thickness of less than 4.5 mm, 4 mm, 3.5 mm, 3 mm, 2.5 mm, 2 mm, 1.5 mm, 1 mm, or 0.5 mm.

The method then comprises dehydrating the formed product shape 150. The formed product shape can be dried to provide the baked crisp product according to any method known in the art. Such methods include, but are not limited to, baking, extrusion cooking, food drying, convection drying, microwave oven drying, sun drying, freeze drying, ambient drying and dehydrating. In one embodiment, a dehydrator is used in order to dehydrate the product shape.

In some embodiments the drying is carried out at a temperature from 40 °C to 120 °C, or from 40 °C to 100 °C, or from 40 °C to 90 °C, or from 40 °C to 80 °C, or from 40 °C to 70 °C, or from 40 °C to 60 °C, or from 40 °C to 50 °C. In some embodiments, the drying is carried out at a temperature greater than or equal to 25 °C, or 35 °C, or 50 °C, or 60 °C, or 70 °C, or 80 °C, or 100 °C. In some embodiments, the drying is carried out a temperature less than 120 °C, or 100 °C, or 90 °C, or 80 °C, or 70 °C, or 60 °C, or 50 °C. In some embodiments, heating above the temperature described herein may adversely affect the flavour profile.

The dehydration step 150 can be carried out for any suitable duration, and will depend on the temperature at which the dehydration is carried out. For example, the dehydration may be carried out for a duration of from 1 to 10 hours. In some embodiments, the dehydration is carried out for a duration of at least 1, 2, 3, 4, 5, 6, 7, 8, or 9 hours. In some embodiments, the dehydration is carried out for a duration of less than 9, 8, 7, 6, 5, 4, 3, or 2 hours.

In some embodiments the feed mixture may be subjected to extrusion cooking, thereby carrying out the forming step 140 and dehydrating step 150 (c) and (d) simultaneously.

As described above, the product is prepared by baking. The method of producing product may be subjected to other cooking process, such as boiling, The product is preferably a dehydrated/baked crisp product, and has not been fried.

In some embodiments, some or all of the fruit and/or vegetable ingredients may be provided as raw ingredients. That is, some or all of the fruit and/or vegetable ingredients may not have been cooked or in any way treated so as to irreversibly denature enzymes therein prior to their use in the method of the present invention. Raw fruit and/or vegetable ingredients include dried or dehydrated fruit and/or vegetable ingredients which have not been cooked.

In some embodiments, each step of the method of producing a baked crisp product is carried out a temperature of less than about 120 °C. In some embodiments, heating above 120 °C may adversely affect the flavour profile.

Another aspect of the present invention is a baked crisp product obtainable from any of the methods disclosed herein.

### Examples

In the examples below, only examples falling within the scope of the claims are considered as part of the present invention.

### Example 1

### Lamb and Onion Crisp

150g of pre-cooked lamb meat, 120g of sautéed onions, 20g of raisins, and 2g of psyllium seed husk where blended together. The mixture was heated to 100 °C, blended, and the mixture rolled out to a thickness of 3mm. The formed product shape was dried at 50 °C for 10 hours.

### Example 2

### Carrot and Kimchi Crisp

100g of raw carrot was blended to a smooth consistency. The carrot was combined with 2.5g of psyllium seed husk, blended, and heated to 100 °C to provide a heat-treated mixture. Separately, 300g of raw carrot, 100g of kimchi (fermented cabbage and chili) and 50g of sesame seed were blended. The carrot, kimchee and sesame seed mixture was combined with the heat-treated mixture, salt and pepper added, and the mixture smoothed out on a tray. The formed product shape was dried until crispy at 46 °C.

### Example 3

### Beetroot and Goats Cheese with Zatar and Chili Crisp

450g of raw beetroot was blended to a smooth consistency. The beetroot was combined with 4.7g of psyllium seed husk and heated to 100 °C to provide a heat-treated mixture. Separately, 200g of yogurt, 80g of goat's cheese, 15g of hazelnuts, salad onions, garlic, zatar, chili, and salt and pepper (added to taste) were blended to form a second mixture. The two mixtures were combined, salt and pepper added, and the mixture smoothed out on a tray. The formed product shape was dried at 46 °C until crispy.

### Example 4

### Tomato and Feta Salad Crisp

125g of raw tomato was blended to a smooth consistency. The tomato was combined with 2.5g of psyllium seed husk and heated to 100 °C to provide a heat-treated mixture. Separately, 80g of feta cheese, 80g of onion, garlic, basil, and salt and pepper (added to taste) were blended to form a second mixture. The two mixtures were combined, salt and pepper added, and the mixture smoothed out on a tray. The formed product shape was dried at 46 °C until crispy.

### Example 5

300g milk, 12.5g orange zest and 0.4g lemon zest were heated to a boil and simmered for 20 mins. Then, 1.4g psyllium was added and blended to provide a heat-treated mixture. Separately, 17g orange, 30g lemon, 5.25g egg white powder, 20g orange juice, 7 mL Cointreau^{®}, 1/12 tsp ginger, 1/12 tsp nutmeg, 1/12 tsp cinnamon, 1/24 tsp clove, and 0.8g psyllium were blended to form a second mixture. The heat-treated mixture was allowed to cool, and then the second mixture combined with the heat-treated mixture. The combined mixture was poured into circular moulds and dried at 46 °C until crispy.

The resulting baked crisp products had a roughly circular, planar shape, having a diameter of 5 cm and a thickness of 0.5 mm. Deformation properties of the baked crisp products were obtained from burst tests. Samples were analysed on a TA-XT plus texture analyser (Stable Micro Solutions, UK). A stainless steel spherical probe (radius 2.5 mm) and hollow cylindrical base (diameter 30 mm) were used. The probe was advanced down to the sample product at a constant pre-test speed until touching the sample with a trigger force. The probe was then advanced at a constant test speed until the probe burst through the sample. The parameters of the burst test are given below in Table 1.

**Table 1**

| **Test mode** | Compression |
|---|---|
| **Pre-test speed** | 1 mm/s |
| **Test speed** | 1 mm/s |
| **Post-test speed** | 10 mm/s |
| **Target mode** | Distance |
| **Distance** | 10 mm |
| **Trigger force** | 5 g (≈ 49 mN) |
| **Load cell** | 5 kg |

The maximum force exerted on the sample before breaking is taken to be the hardness of the sample. The distance measure from touching the sample at trigger force to the breaking of the sample is taken to be the flexibility of the sample. The experiment was run on 15 sample baked crisp products. The average hardness and flexibility of the samples is given in Table 2.

**Table 2**

| | Value | Standard Deviation | Coefficient of variation |
|---|---|---|---|
| Hardness | 429 g (≈ 4.21 N) | 50 | 12 |
| Flexibility | 2.3 mm | 0.6 | 24 |

The force at the first "peak" of pressure is taken to be the fracturability of the sample. Only one peak of pressure was observed. Accordingly, the average fracturability of the samples was also 429 g (≈ 4.21 N).

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of producing a baked crisp product for human consumption, the method comprising:
providing blended food ingredients, wherein food ingredients include main food ingredients and optionally other food ingredients;
mixing the blended food ingredients with binder ingredient(s) and optionally water;
heating the mixture to a temperature of from 50 to 100 °C, thereby heat-treating the binder ingredient(s) to provide a heat-treated mixture comprising binder component;
optionally adding further blended or unblended food ingredients to the heat-treated mixture;
optionally blending the heat-treated mixture;
forming the heat-treated mixture to provide a formed product shape; and
dehydrating the formed product shape to provide a baked crisp product, whereby during the heating and dehydrating the ingredients are converted to corresponding components;
wherein the baked crisp product consists of:
main food component in an amount of from 95 to 99.9% by total dry component weight, wherein the main food component consists of two or more components selected from the group consisting of vegetable, fruit, and meat;
the main food component consisting of:
vegetable in an amount of from 0 to 97% by total dry component weight;
fruit in an amount of from 0 to 65% by total dry component weight;
meat in an amount of from 0 to 97% by total dry component weight;
other food component in an amount of from 0 to 5% by total dry component weight; and
binder component in an amount of from 0.1 to 5% by total dry component weight;
wherein the baked crisp product has a sugar content of from 0 to 40%, a fat content of from 0 to 40%, and a starch content of 0 to 10% by weight, and
wherein the binder ingredient comprises unrefined psyllium to provide a binder component comprising unrefined heat-treated psyllium in an amount of from 50 to 100% w/w of the binder component.

2. A method according to claim 1, comprising adding further binder component to the heat-treated mixture.

3. A method according to claim 1 or 2, wherein the heat-treated mixture has a water content of at least 80% before dehydrating.

4. A method according to any of claims 1 to 3, wherein forming the heat-treated mixture comprises shaping the heat-treated mixture into a sheet with a thickness equal to or less than 5 mm.

5. A method according to any of claims 1 to 4, wherein at least some of the provided blended food ingredients are cooked.

6. A method according to any of claims 1 to 5, wherein dehydrating the mixture comprises heating the mixture to a temperature of from 40 to 120 °C, optionally wherein dehydrating the mixture is carried out for a duration of from 1 hour to 10 hours.

7. A baked crisp product for human consumption, the baked crisp product consisting of:
main food component in an amount of from 95 to 99.9% by total dry component weight, wherein the main food component consists of two or more components selected from the group consisting of vegetable, fruit, and meat; the main food component consisting of:
vegetable in an amount of from 0 to 97% by total dry component weight;
fruit in an amount of from 0 to 65% by total dry component weight;
meat in an amount of from 0 to 97% by total dry component weight;
other food component in an amount of from 0 to 5% by total dry component weight; and
binder component in an amount of from 0.1 to 5% by total dry component weight;
wherein the baked crisp product has a sugar content of from 0 to 40%, a fat content of from 0 to 40%, and a starch content of 0 to 10% by weight, and
wherein the binder component comprises unrefined heat-treated psyllium in an amount of from 50 to 100% w/w of the binder component.

8. A baked crisp product according to claim 7, wherein 50% to 100% of the main food component is formed of wholefood components.

9. A baked crisp product according to claim 7 or claim 8, wherein the main food component comprises vegetable selected from the group consisting of butternut squash, carrot, onion, parsnip, bell pepper, chili pepper, tomato, artichoke, asparagus, avocado, broccoli, cauliflower, potato, sweet potato, yam, pumpkin, marrow, aubergine, cucumber, spring onion, chive, garlic, leek, beetroot, celery, endive, spinach, kale, seaweed, cabbage, Brussels sprouts, watercress, chard, fennel, olive, kidney bean, navy bean, pinto bean, haricot bean, lima bean, butter bean, mung bean, runner bean, ricebean, broad bean, field bean, soybean, garden pea, field pea, corn kernel (including sweetcorn), chickpea, black-eyed pea, lentil, poppy seed, sesame seed, sunflower seed, pumpkin seed, hemp seed, or a combination thereof; and/or
fruit selected from the group consisting of cranberry, goji berry, grape, cherry, strawberry, raspberry, blackberry, blackcurrant, boysenberry, elderberry, redcurrant, damson, plum, gooseberry, mulberry, chokeberry, amla berry, rhubarb, date, apple, pear, orange, lemon, lime, grapefruit, tangerine, satsuma, banana, mango, kiwi fruit, kumquat, lychee, papaya, melon, water melon, apricot, peach, nectarine, coconut, fig, pineapple, pomegranate, almonds, chestnuts, hazelnuts, pecans, pistachios, walnuts, Brazil nuts, cashew nuts, macadamia nuts, peanuts, pine nuts, or a combination thereof; and/or
meat selected from the group consisting of chicken, beef, pork, lamb, fish, and combinations thereof.

10. A baked crisp product according to any of claims 7 to 9, wherein the other components are selected from the group consisting of salt, sweeteners, herbs, spices, and combinations thereof.

11. A baked crisp product according to any of claims 7 to 10, wherein the baked crisp product has a thickness of less than 5 mm.

12. A baked crisp product according to any of claims 7 to 11, wherein the baked crisp product has a fracturability of from 1 N to 10 N.

13. A baked crisp product according to any of claims 7 to 12, wherein the baked crisp product has a moisture content of less than 10%.

14. A baked crisp product according to any of claims 7 to 13, wherein the binder component consists of psyllium, optionally unrefined heat-treated psyllium.

## Patentansprüche

1. Verfahren zur Herstellung eines gebackenen knusprigen Produkts für den menschlichen Verzehr, wobei das Verfahren umfasst:
Bereitstellen gemischter Lebensmittelzutaten, wobei Lebensmittelzutaten Hauptlebensmittelzutaten und optional andere Lebensmittelzutaten beinhalten;
Mischen der gemischten Lebensmittelzutaten mit Bindemittelzutat(en) und optional Wasser;
Erwärmen der Mischung auf eine Temperatur von 50 bis 100 °C, wodurch die Bindemittelzutat(en) wärmebehandelt wird/werden, um eine wärmebehandelte Mischung einschließlich Bindemittelkomponente bereitzustellen;
optional Hinzufügen weiterer gemischter oder ungemischter Lebensmittelzutaten zu der wärmebehandelten Mischung;
optional Mischen der wärmebehandelten Mischung;
Bilden der wärmebehandelten Mischung, um eine gebildete Produktform bereitzustellen; und
Dehydrieren der gebildeten Produktform, um ein gebackenes knuspriges Produkt bereitzustellen, wodurch während des Erwärmens und Dehydrierens die Zutaten in entsprechende Komponenten umgewandelt werden;
wobei das gebackene knusprige Produkt aus Folgendem besteht:
Hauptlebensmittelkomponente in einer Menge von 95 bis 99,9 % nach Gesamtgewicht der Trockenkomponente, wobei die Hauptlebensmittelkomponente aus zwei oder mehr Komponenten besteht, die ausgewählt sind aus der Gruppe bestehend aus Gemüse, Obst und Fleisch;
wobei die Hauptlebensmittelkomponente aus Folgendem besteht:
Gemüse in einer Menge von 0 bis 97 % nach Gesamtgewicht der Trockenkomponente;
Obst in einer Menge von 0 bis 65 % nach Gesamtgewicht der Trockenkomponente;
Fleisch in einer Menge von 0 bis 97 % nach Gesamtgewicht der Trockenkomponente;
sonstige Lebensmittelkomponente in einer Menge von 0 bis 5 % nach Gesamtgewicht der Trockenkomponente; und
Bindemittelkomponente in einer Menge von 0,1 bis 5 % nach Gesamtgewicht der Trockenkomponente;
wobei das gebackene knusprige Produkt einen Zuckergehalt von 0 bis 40 %, einen Fettgehalt von 0 bis 40 % und einen Stärkegehalt von 0 bis 10 % nach Gewicht aufweist, und
wobei die Bindemittelzutat unraffiniertes Psyllium umfasst, um eine Bindemittelkomponente bereitzustellen, die unraffiniertes wärmebehandeltes Psyllium in einer Menge von 50 bis 100 % w/w der Bindemittelkomponente umfasst.

2. Verfahren nach Anspruch 1, umfassend das Hinzufügen einer weiteren Bindemittelkomponente zu der wärmebehandelten Mischung.

3. Verfahren nach Anspruch 1 oder 2, wobei die wärmebehandelte Mischung einen Wassergehalt von mindestens 80 % vor dem Dehydrieren aufweist.

4. Verfahren nach einem der Ansprüche 1 bis 3, wobei das Bilden der wärmebehandelten Mischung das Formen der wärmebehandelten Mischung zu einer Lage mit einer Dicke von gleich oder weniger als 5 mm umfasst.

5. Verfahren nach einem der Ansprüche 1 bis 4, wobei mindestens einige der bereitgestellten gemischten Lebensmittelzutaten gekocht werden.

6. Verfahren nach einem der Ansprüche 1 bis 5, wobei das Dehydrieren der Mischung das Erwärmen der Mischung auf eine Temperatur von 40 bis 120 °C umfasst, wobei optional das Dehydrieren der Mischung für eine Dauer von 1 Stunde bis 10 Stunden ausgeführt wird.

7. Gebackenes knuspriges Produkt für den menschlichen Verzehr, wobei das gebackene knusprige Produkt aus Folgendem besteht:
Hauptlebensmittelkomponente in einer Menge von 95 bis 99,9 % nach Gesamtgewicht der Trockenkomponente, wobei die Hauptlebensmittelkomponente aus zwei oder mehr Komponenten besteht, die ausgewählt sind aus der Gruppe bestehend aus Gemüse, Obst und Fleisch; wobei die Hauptlebensmittelkomponente aus Folgendem besteht:
Gemüse in einer Menge von 0 bis 97 % nach Gesamtgewicht der Trockenkomponente;
Obst in einer Menge von 0 bis 65 % nach Gesamtgewicht der Trockenkomponente;
Fleisch in einer Menge von 0 bis 97 % nach Gesamtgewicht der Trockenkomponente;
sonstige Lebensmittelkomponente in einer Menge von 0 bis 5 % nach Gesamtgewicht der Trockenkomponente; und
Bindemittelkomponente in einer Menge von 0,1 bis 5 % nach Gesamtgewicht der Trockenkomponente;
wobei das gebackene knusprige Produkt einen Zuckergehalt von 0 bis 40 %, einen Fettgehalt von 0 bis 40 % und einen Stärkegehalt von 0 bis 10 % nach Gewicht aufweist, und
wobei die Bindemittelkomponente unraffiniertes wärmebehandeltes Psyllium in einer Menge von 50 bis 100 % w/w der Bindemittelkomponente umfasst.

8. Gebackenes knuspriges Produkt nach Anspruch 7, wobei 50 % bis 100 % der Hauptlebensmittelkomponente aus Vollwertkostkomponenten gebildet sind.

9. Gebackenes knuspriges Produkt nach Anspruch 7 oder Anspruch 8, wobei die Hauptlebenskomponente Gemüse umfasst, das ausgewählt ist aus der Gruppe bestehend aus Butternusskürbis, Karotte, Zwiebel, Pastinake, Paprika, Chilischote, Tomate, Artischocke, Spargel, Avocado, Brokkoli, Blumenkohl, Kartoffel, Süßkartoffel, Jamswurzel, Kürbis, Markkürbis, Aubergine, Gurke, Frühlingszwiebel, Schnittlauch, Knoblauch, Porree, Rote Bete, Sellerie, Endivie, Spinat, Grünkohl, Seetang, Kohl, Rosenkohl, Brunnenkresse, Mangold, Fenchel, Olive, Kidneybohne, Navybohne, Pintobohne, Haricot-Bohne, Limabohne, Butterbohne, Mungobohne, Stangenbohne, Reisbohne, Ackerbohne, Feldbohne, Sojabohne, Gartenerbse, Felderbse, Maiskorn (einschließlich Zuckermais), Kichererbse, Schwarzaugenerbse, Linse, Mohnsamen, Sesamsamen, Sonnenblumensamen, Kürbissamen, Hanfsamen oder einer Kombination davon; und/oder
Obst, das ausgewählt ist aus der Gruppe bestehend aus Preiselbeere, Goji-Beere, Traube, Kirsche, Erdbeere, Himbeere, Brombeere, schwarzer Johannisbeere, Boysenbeere, Holunderbeere, roter Johannisbeere, Damaszenerpflaume, Pflaume, Stachelbeere, Maulbeere, Chokebeere, Amla-Beere, Rhabarber, Dattel, Apfel, Birne, Orange, Zitrone, Limone, Pampelmuse, Mandarine, Satsuma, Banane, Mango, Kiwifrucht, Kumquat, Litschi, Papaya, Melone, Wassermelone, Aprikose, Pfirsich, Nektarine, Kokosnuss, Feige, Ananas, Granatapfel, Mandeln, Kastanien, Haselnüssen, Pekannüssen, Pistazien, Walnüssen, Paranüssen, Cashewnüssen, Macadamianüssen, Erdnüssen, Pinienkernen oder einer Kombination davon; und/oder
Fleisch, das ausgewählt ist aus der Gruppe bestehend aus Huhn, Rind, Schwein, Lamm, Fisch und Kombinationen davon.

10. Gebackenes knuspriges Produkt nach einem der Ansprüche 7 bis 9, wobei die anderen Komponenten ausgewählt sind aus der Gruppe bestehend aus Salz, Süßstoffen, Kräutern, Gewürzen und Kombinationen davon.

11. Gebackenes knuspriges Produkt nach einem der Ansprüche 7 bis 10, wobei das gebackene knusprige Produkt eine Dicke von weniger als 5 mm aufweist.

12. Gebackenes knuspriges Produkt nach einem der Ansprüche 7 bis 11, wobei das gebackene knusprige Produkt eine Bruchfestigkeit von 1 N bis 10 N aufweist.

13. Gebackenes knuspriges Produkt nach einem der Ansprüche 7 bis 12, wobei das gebackene knusprige Produkt einen Feuchtigkeitsgehalt von weniger als 10 % aufweist.

14. Gebackenes knuspriges Produkt nach einem der Ansprüche 7 bis 13, wobei die Bindemittelkomponente aus Psyllium, optional unraffiniertem wärmebehandeltem Psyllium, besteht.

## Revendications

1. Procédé de production d'un produit croustillant cuit au four pour la consommation humaine, le procédé comprenant :
la fourniture d'ingrédients alimentaires mélangés, lesdits ingrédients alimentaires comprenant des ingrédients alimentaires principaux et éventuellement d'autres ingrédients alimentaires ;
le malaxage des ingrédients alimentaires mélangés avec un ou plusieurs ingrédients liants et éventuellement de l'eau ;
le chauffage de la préparation à une température comprise entre 50 et 100 °C, de manière à traiter thermiquement le ou les ingrédients liants pour obtenir une préparation traitée thermiquement comprenant un composant liant ;
éventuellement l'ajout d'autres ingrédients alimentaires mélangés ou non mélangés à la préparation traitée thermiquement ;
éventuellement le mélange de la préparation traitée thermiquement ;
le façonnage de la préparation traitée thermiquement pour obtenir une forme de produit façonnée ; et
la déshydratation de la forme de produit façonnée pour obtenir un produit croustillant cuit au four, lesdits ingrédients étant convertis en composants correspondants pendant le chauffage et la déshydratation ;
ledit produit croustillant cuit au four étant constitué :
d'un composant alimentaire principal en une quantité comprise entre 95 et 99,9 % en poids de composant sec total, ledit composant alimentaire principal étant constitué de deux composants ou plus choisis dans le groupe constitué d'un légume, d'un fruit et de viande ;
le composant alimentaire principal étant constitué :
d'un légume en une quantité comprise entre 0 et 97 % en poids de composant sec total ;
d'un fruit en une quantité comprise entre 0 et 65 % en poids de composant sec total ;
de viande en une quantité comprise entre 0 et 97 % en poids de composant sec total ;
d'un autre composant alimentaire en une quantité comprise entre 0 et 5 % en poids de composant sec total ; et
d'un composant liant en une quantité comprise entre 0,1 et 5 % en poids de composant sec total ;
ledit produit croustillant cuit au four comportant une teneur en sucre comprise entre 0 et 40 %, une teneur en matières grasses comprise entre 0 et 40 % et une teneur en amidon comprise entre 0 et 10 % en poids, et
ledit ingrédient liant comprend du psyllium non raffiné pour produire un composant liant comprenant du psyllium non raffiné traité thermiquement en une quantité comprise entre 50 et 100 % p/p du composant liant.

2. Procédé selon la revendication 1, comprenant l'ajout d'un autre composant liant à la préparation traitée thermiquement.

3. Procédé selon la revendication 1 ou 2, ladite préparation traitée thermiquement comportant une teneur en eau d'au moins 80 % avant déshydratation.

4. Procédé selon l'une quelconque des revendications 1 à 3, ledit façonnage de la préparation traitée thermiquement comprenant le façonnage de la préparation traitée thermiquement en une feuille d'une épaisseur inférieure ou égale à 5 mm.

5. Procédé selon l'une quelconque des revendications 1 à 4, au moins certains des ingrédients alimentaires mélangés fournis étant cuits.

6. Procédé selon l'une quelconque des revendications 1 à 5, la déshydratation de la préparation comprend le chauffage de la préparation à une température comprise entre 40 et 120 °C, éventuellement ladite déshydratation de la préparation étant effectuée pendant une durée comprise entre 1 heure et 10 heures.

7. Produit croustillant cuit au four pour la consommation humaine, le produit croustillant cuit au four étant constitué :
d'un composant alimentaire principal en une quantité comprise entre 95 et 99,9 % en poids de composant sec total, ledit composant alimentaire principal étant constitué de deux composants ou plus choisis dans le groupe constitué d'un légume, d'un fruit et de viande ; le composant alimentaire principal étant constitué :
d'un légume en une quantité comprise entre 0 et 97 % en poids de composant sec total ;
d'un fruit en une quantité comprise entre 0 et 65 % en poids de composant sec total ;
de viande en une quantité comprise entre 0 et 97 % en poids de composant sec total ;
d'un autre composant alimentaire en une quantité comprise entre 0 et 5 % en poids de composant sec total ; et
d'un composant liant en une quantité comprise entre 0,1 et 5 % en poids de composant sec total ;
ledit produit croustillant cuit au four ayant une teneur en sucre comprise entre 0 et 40 %, une teneur en matières grasses comprise entre 0 et 40 % et une teneur en amidon comprise entre 0 et 10 % en poids, et
ledit composant liant comprenant du psyllium non raffiné traité thermiquement en une quantité comprise entre 50 et 100 % p/p du composant liant.

8. Produit croustillant cuit au four selon la revendication 7, 50 % à 100 % du composant alimentaire principal étant constitué de composants alimentaires entiers.

9. Produit croustillant cuit au four selon la revendication 7 ou la revendication 8, ledit composant alimentaire principal comprenant un légume choisi dans le groupe constitué de courge musquée, carotte, oignon, panais, poivron, piment, tomate, artichaut, asperges, avocat, brocoli, chou-fleur, pomme de terre, patate douce, igname, citrouille, moelle, aubergine, concombre, oignon de printemps, ciboulette, ail, poireau, betterave, céleri, endive, épinards, chou frisé, algues, chou, choux de Bruxelles, cresson, bette à carde, fenouil, olive, haricots secs, petits haricots blancs, haricots pintos, haricots communs, haricots de Lima, haricots jaunes, haricots velus, haricots d'Espagne, haricots riz, féveroles à gros grains, féveroles à petits grains, soja, pois de jardin, pois potagers, grains de maïs (y compris le maïs doux), pois chiches, pois à hile noir, lentille, graines de pavot, graines de sésame, graines de tournesol, graines de citrouille, graines de chanvre ou leurs combinaisons ; et/ou
un fruit choisi dans le groupe constitué de canneberge, baie de goji, raisin, cerise, fraise, framboise, mûre, cassis, mûre de Boysen, baie de sureau, groseille, prune de Damas, prune, groseille à maquereau, mûre blanche, cerise de Virginie, baie d'Amla, rhubarbe, date, pomme, poire, orange, citron, chaux, pamplemousse, mandarine, satsuma, banane, mangue, kiwi, kumquat, litchi, papaye, melon, pastèque, abricot, pêche, nectarine, noix de coco, figue, ananas, grenade, amandes, châtaignes, noisettes, noix de pécan, pistaches, noix, noix du Brésil, noix de cajou, noix de macadamia, cacahuètes, pignons ou leurs combinaisons ; et/ou
de la viande choisie dans le groupe constitué de poulet, bœuf, porc, agneau, poisson et leurs combinaisons.

10. Produit croustillant cuit au four selon l'une quelconque des revendications 7 à 9, lesdits autres composants étant choisis dans le groupe constitué de sel, d'édulcorants, d'herbes, d'épices et de leurs combinaisons.

11. Produit croustillant cuit au four selon l'une quelconque des revendications 7 à 10, ledit produit croustillant cuit au four comportant une épaisseur inférieure à 5 mm.

12. Produit croustillant cuit au four selon l'une quelconque des revendications 7 à 11, ledit produit croustillant cuit au four comportant une fracturabilité comprise entre 1 N et 10 N.

13. Produit croustillant cuit au four selon l'une quelconque des revendications 7 à 12, ledit produit croustillant cuit au four comportant une teneur en humidité inférieure à 10 %.

14. Produit croustillant cuit au four selon l'une quelconque des revendications 7 à 13, ledit composant liant étant constitué de psyllium, éventuellement de psyllium non raffiné traité thermiquement.
